# EUROPÄISCHE PATENTSCHRIFT

(11) **EP 3 153 264 B1**
(45) Veröffentlichungstag und Bekanntmachung des Hinweises auf die Patenterteilung: **27.10.2021**
(21) Anmeldenummer: 16190887.6
(22) Anmeldetag: 27.09.2016
(51) Int. Cl.: B23D 31/00

(54) **BRUCHTRENNVORRICHTUNG**
BREAK SEPARATOR
DISPOSITIF DE SÉPARATION PAR RUPTURE

(30) Priorität: 09.10.2015 DE 102015117263
(43) Veröffentlichungstag der Anmeldung: 12.04.2017
(73) Patentinhaber: Alfing Kessler Sondermaschinen GmbH, 73433 Aalen (DE)
(72) Erfinder: Retzler, Peter, 73574 Iggingen (DE)
(74) Vertreter: Patentanwälte Bregenzer und Reule Partnerschaftsgesellschaft mbB

(56) Entgegenhaltungen:
- EP-A1- 0 713 741
- EP-A1- 1 398 103
- WO-A1-2015/049039
- DE-A1- 19 733 387
- US-A1- 2002 023 939

## Beschreibung

Die Erfindung betrifft eine Bruchtrennvorrichtung zum Bruchtrennen eines Werkstücks, insbesondere eines Pleuels, gemäß dem Oberbegriff des Anspruchs 1.

Eine derartige Bruchtrennvorrichtung ist z.B. in US 2002/0023939 A1 beschrieben.

In EP 0 999 912 B1 oder DE 197 33 387 A1 wird vorgeschlagen, die Druckkraft beim Spreizen über einen Teilflächen- oder Linienbereich in der Lageröffnung einzubringen. Dazu hat der Spreizdorn beispielsweise eine ballige Gestalt oder konische Gestalt und übt jedenfalls die Druckkraft nicht vollflächig in der Lageröffnung oder Bohrung aus. Das Ergebnis einer derartigen Bruchtrennung ist jedoch nicht in allen Fällen zufriedenstellend.

Es ist daher die Aufgabe der vorliegenden Erfindung, eine verbesserte Bruchtrennvorrichtung bereitzustellen.

Zur Lösung der Aufgabe ist eine Bruchtrennvorrichtung gemäß der technischen Lehre des Anspruchs 1 vorgesehen.

Das Werkstück ist zweckmäßigerweise ein Motorbauteil, ein Ventilgehäuse oder dergleichen.

Es ist dabei ein Grundgedanke, dass die Lageröffnung im Bereich der Sollbruchzone durch die Stützflächenanordnung abgestützt ist, sodass das Werkstück an der Oberfläche der Lageröffnung nicht oder nur unwesentlich ausbricht. Es ergibt sich dadurch eine optimale Oberfläche der Lageröffnung im Bereich der Sollbruchzone, sodass bei vielen Anwendungsfällen sogar eine Nachbearbeitung der Lageröffnung unnötig ist. Ferner ist es möglich, dass zur Bereitstellung einer optimalen Lageroberfläche für beispielsweise Wälzkörper, insbesondere Kugeln oder Rollen, in die Lageröffnung keine Lagerhülse oder Lagerschale eingesetzt werden muss, die dann die Lageroberfläche bereitstellt. Bereits die Oberfläche der Lageröffnung eignet sich als eine Lageroberfläche zum Abwälzen von Wälzkörpern eines Wälzlagers.

Die Stützflächen der Stützflächenanordnung haben also zweckmäßigerweise keinen oder einen allenfalls geringen Bruchtrennflächen-Winkelabstand zur jeweiligen Bruchtrennfläche, sodass die Lageröffnung im Bereich der Bruchtrennfläche durch die Stützflächen abgestützt ist.

Die Aufnahmezone der Spreizelementanordnung ist beispielsweise eine Ausdehnungszone oder ein Ausdehnungsbereich, in den hinein sich jeweils derjenige Abschnitt der Lageröffnung ausdehnen kann, an dem keine Anlagefläche der Spreizelementanordnung anliegt. Somit findet die Verformung der ersten oder zweiten Komponente im Bereich der Lageröffnung abseits der Sollbruchzone statt, was zu der bereits erwähnten homogenen und möglichst unbeschädigten Oberfläche der Lageröffnung im Bereich der Sollbruchzone auch nach dem Abtrennen der ersten von der zweiten Komponente beiträgt.

Die Aufnahmezone kann man auch als einen Freiraum bezeichnen. Es ist auch möglich, dass die Aufnahmezone als Bewegungsraum für die Lageröffnung oder das Motorteil im Bereich der Lageröffnung während des Bruchtrennens zu bezeichnen.

Die Aufnahmezone kann auch mehrere Abschnitte haben. Insbesondere ist es möglich, dass mehrere Druckbeaufschlagungsflächen vorgesehen sind, zwischen denen jeweils eine Aufnahmezone vorgesehen ist.

Die Geometrien der Anlageflächen sind vorzugsweise so ausgestaltet, dass sie optimal an die Geometrie der Lageröffnung angepasst sind. Ein Grundgedanke ist es dabei, dass in der Sollbruchzone eine Abstützung gegeben ist und abseits davon gezielt Kraft in die Lageröffnung eingeleitet wird, um die Komponenten des Werkstücks voneinander zu trennen. Die hierfür vorgesehenen Druckbeaufschlagungsflächen haben die entsprechend geeignete Geometrie zur Anlage an der Lageröffnung.

Die Stützflächen sind zur Abstützung der Lageröffnung in der Sollbruchzone vorzugsweise derart ausgestaltet, dass in der Lageröffnung im Ausgangsbereich der Bruchtrennfläche oder entlang einer Ausgangslinie der Bruchtrennfläche eine vollständige oder möglichst vollständige Abstützung gegeben ist. Im Ausgangsbereich der Bruchtrennung ist also in der Lageröffnung eine Abstützung durch die Spreizelementanordnung bzw. deren Anlageflächen gegeben. Dort erfolgt zwar zweckmäßigerweise keine aktive Krafteinleitung derart, dass eine Druckkraft zum Abtrennen der ersten Komponente von der zweiten Komponente ausgeübt wird, jedoch durch die Stützflächenanordnung eine Stützkraft und/oder eine Widerlagerfläche zur Abstützung der Lageroberfläche bereitgestellt ist.

Vorteilhaft ist es, wenn die Stützflächenanordnung mindestens eine Stützfläche aufweist, die sich im Wesentlichen über eine vollständige Länge der Lageröffnung von einem ersten Längsende der Lageröffnung zu einem zweiten Längsende der Lageröffnung erstreckt. Das erste Längsende ist beispielsweise im Bereich einer ersten Stirnseite des Werkstücks, das zweite Längsende im Bereich einer zweiten Stirnseite des Werkstücks vorgesehen. Der Vorteil dieser Konfiguration ist es, dass die Sollbruchzone in Bezug auf die Länge der Lageröffnung vollständig oder zumindest im Wesentlichen vollständig abgestützt ist.

Erfindungsgemäß ist vorgesehen, dass mindestens eine Stützfläche der mindestens einen Stützflächenanordnung eine streifenförmige Gestalt zur Abstützung der Sollbruchzone entlang einer Längsachse der Lageröffnung aufweist. In diesem Zusammenhang ist es insbesondere vorteilhaft, wenn an dem ersten Spreizelement und dem zweiten Spreizelement jeweils eine linienförmige oder streifenförmige oder lineare Stützfläche vorgesehen ist, wobei die beiden Stützflächen zur Anlage an der Lageröffnung beidseits der Bruchtrennfläche oder einer sich dadurch ergebenden Bruchtrennlinie an der Lageröffnung vorgesehen sind. Somit stützt also ein Paar gleichartiger Stützflächen die Lageröffnung in der Sollbruchzone ab.

An dieser Stelle sei aber erwähnt, dass es ausreicht, wenn eines der Spreizelemente in erfindungsgemäßer Weise ausgestaltet ist. Es ist beispielsweise möglich, dass sich eines der Spreizelemente vollflächig an dem Bereich der Lageröffnung einer der Komponenten, beispielsweise der ersten Komponente, abstützt, während das andere Spreizelement die Zonierung mit der Stützflächenanordnung und der mindestens einen Druckbeaufschlagungsfläche sowie der Aufnahmezone aufweist. In diese Aufnahmezone hinein kann sich die Lageröffnung beim Bruchtrennen verformen, während das andere Spreizelement sozusagen vollflächig abstützt.

Vorteilhaft ist ein Spreizelement vorgesehen, das eine Anlagefläche aufweist, welche die Lageröffnung über deren gesamte Länge und/oder deren gesamten Innenumfang zwischen den Sollbruchzonen abstützt. Es ist auch möglich, dass eine Länge dieses Spreizelements im Bereich der Lageröffnung der gesamten Länge des Spreizelements im Bereich der Lageröffnung kleiner ist als eine Länge der Lageröffnung selbst, d.h. dass das Spreizelement an sich nicht in der Lage ist, die Lageröffnung über deren gesamte Länge abzustützen. In diesem Fall ist die Länge der Anlagefläche so zu verstehen, dass sie die Lageröffnung sozusagen maximal abstützt, nämlich über die gesamte Länge des Spreizelements, insoweit das Spreizelement überhaupt in die Lageröffnung eintaucht.

Eines der Spreizelemente hat zweckmäßigerweise keine Aufnahmezone, in die hinein sich die Lageröffnung beim Bruchtrennen verformen kann.

Vorzugsweise ist vorgesehen, dass die mindestens eine Druckbeaufschlagungsfläche eine Druckbeaufschlagungsfläche oder Druckbeaufschlagungszone oder einen Druckbeaufschlagungsabschnitt aufweist, der einen maximalen Abstand zu den Sollbruchzonen aufweist. Diese Druckbeaufschlagungsfläche oder Druckbeaufschlagungszone kann in einer anderen Definition auch in einem Scheitelbereich des Spreizelements zwischen den Sollbruchzonen vorgesehen sein. Weiterhin kann die Druckbeaufschlagungsfläche oder Druckbeaufschlagungszone im Scheitelbereich zwischen den Stützflächenanordnungen vorgesehen sein. Die Stützflächenanordnungen sind beispielsweise jeweils einer Sollbruchzone zugeordnet.

Eine vorteilhafte Ausgestaltung der Erfindung sieht vor, dass sich die mindestens eine Druckbeaufschlagungsfläche bogenförmig oder ringförmig zwischen den Sollbruchzonen erstreckt.

Die mindestens eine Druckbeaufschlagungsfläche kann eine durchgehende Druckbeaufschlagungsfläche sein. Insbesondere ist es vorteilhaft, wenn sie sich homogen und durchgängig zwischen den Sollbruchzonen erstreckt. Es ist aber auch möglich, dass die mindestens eine Druckbeaufschlagungsfläche zueinander beabstandete Abschnitte aufweist. Es ist auch möglich, dass beispielsweise bogenförmig nebeneinander angeordnete Druckbeaufschlagungsflächen vorgesehen sind, zwischen denen jeweils ein Abstand vorhanden ist. Somit können sich die Druckbeaufschlagungsflächen oder deren Abschnitte möglichst optimal an der Lageroberfläche abstützen und Druck auf diese im Sinne eines Bruchtrennens ausüben.

Die mindestens eine Druckbeaufschlagungsfläche kann vollständig von der Stützflächenanordnung beabstandet sein, also dazu einen Abstand haben. Eine vorteilhafte und in der Zeichnung dargestellte Ausführungsform der Erfindung sieht vor, dass mindestens eine Druckbeaufschlagungsfläche mit einer Stützfläche der Stützflächenanordnung kommuniziert oder mit dieser verbunden ist. Somit geht die Stützfläche also sozusagen in die Druckbeaufschlagungsfläche über oder die Druckbeaufschlagungsfläche in die Stützfläche über.

Es ist möglich, dass eine Anlagefläche zwei Abschnitte aufweist, von denen einer eine Stützfläche der Stützflächenanordnung und der andere Abschnitt eine Druckbeaufschlagungsfläche definiert.

Vorteilhaft ist eine möglichst flächige Anlage der Anlageflächen an der Lageröffnung. Dies gilt vorteilhaft für die Stützflächenanordnung als auch für die mindestens eine Druckbeaufschlagungsfläche.

Der Außenradius einer oder aller der Anlageflächen entspricht vorzugsweise im Wesentlichen einem Innenradius an einem jeweiligen Abschnitt des Innenumfangs der Lageröffnung, an welchem die jeweilige Anlagefläche zur Anlage kommt. Selbstverständlich ist es vorteilhaft, wenn sich die Radien exakt entsprechen.

Eine weitere vorteilhafte Maßnahme sieht vor, dass eine oder alle Anlageflächen zylindrisch sind. Auch eine bezüglich der Längsachse der Lageröffnung lang gestreckte oder streifenförmige Stützfläche der Stützflächenanordnung ist zweckmäßigerweise am Außenumfang zylindrisch, jedenfalls mit einer Innenkontur der Lageröffnung konturgleich.

Es ist zweckmäßig, wenn eine oder alle Anlageflächen, insbesondere die Anlageflächen der mindestens einen Stützflächenanordnung, zur flächigen Anlage an einer Innenumfangskontur der Lageröffnung eine dazu passende und geeignete Außenumfangskontur aufweisen. Dies kann beispielsweise heißen, dass im Bereich der Sollbruchstelle oder Sollbruchzone eine Planfläche vorhanden ist, wobei dann die Stützflächenanordnung vorteilhaft ebenfalls als Planfläche ausgestaltet ist. Bevorzugt sind jedoch eine zylindrische Ausgestaltung der Stützflächenanordnung oder zylindrische Außenumfangskontur der Stützflächenanordnung.

In diesem Sinne ist auch zu verstehen, dass eine Krümmung des Innenumfangs der Lageröffnung bezüglich der Längsachse in der Regel nicht vorhanden ist, diese also z.B. zylindrisch ist. Selbst wenn eine Krümmung vorhanden ist, greift die folgende vorteilhafte Maßnahme:
Bevorzugt ist es, wenn eine oder alle Anlageflächen bezüglich der Längsachse keine Krümmung aufweisen, was im Zusammenhang mit der in Längsachsrichtung nicht gekrümmten Innenumfangsfläche der Lageröffnung steht, oder eine solche Krümmung, die der Krümmung des Innenumfangs der Lageröffnung in Richtung der Längsachse entspricht.

Bei allen der oben erwähnten drei Maßnahmen wird erzielt, dass die jeweilige Anlagefläche am jeweiligen Innenumfang-Abschnitt flächig anliegt.

Es ist aber auch möglich, dass die mindestens eine Druckbeaufschlagungsfläche eine ballige Gestalt aufweist. Die Druckbeaufschlagungsfläche muss nicht flächig am Innenumfang der Lageröffnung anliegen, insbesondere wenn sie keine Stützwirkung entfalten muss.

Das erste Spreizelement und/oder das mindestens eine zweite Spreizelement weist zweckmäßigerweise einen halbkreisförmigen Außenumfang auf. Die jeweiligen Anlageflächen dieses Spreizelements sind im Bereich der jeweiligen Längsenden des Halbkreises vorgesehen. Im Bereich der Längsenden eines Halbkreises eines solchen Spreizelements ist jeweils mindestens eine Stützfläche einer Stützflächenanordnung vorgesehen. Weiterhin ist es zweckmäßig, wenn die mindestens eine Druckbeaufschlagungsfläche im Bereich eines Scheitelpunkts des Außenumfangs des jeweiligen Spreizelements vorgesehen ist. Bevorzugt erstreckt sich die mindestens eine Druckbeaufschlagungsfläche von dem einen Längsende des Halbkreises bis zum anderen Längsende des Halbkreises. Es ist dabei möglich, dass die Druckbeaufschlagungsfläche rechtwinkelig quer zu einer Längsachse des Spreizelements und/oder der Längsachse der Lageröffnung verläuft. Mithin kann also die Druckbeaufschlagungsfläche beispielsweise bogenförmig zwischen den Längsenden des Halbkreises verlaufen. Es ist auch möglich, dass die Druckbeaufschlagungsfläche schräg zu einer Längsachse des Spreizelements verläuft.

Das erste Spreizelement und das mindestens eine zweite Spreizelement weisen zweckmäßigerweise jeweils einen Außenumfang entsprechend einem Halbkreis von etwa 180° auf.

Selbstverständlich ist es denkbar, dass auch drei Spreizelemente vorhanden sind. Bei dieser Konfiguration kann beispielsweise das erste Spreizelement einen Winkelumfang von etwa 180° (entsprechend einem Halbkreis) haben, während die beiden anderen Spreizelemente jeweils einen Winkelumfang von beispielsweise jeweils nur maximal 90° haben.

Eine andere Konfiguration kann vorsehen, dass mehrere Spreizelemente vorhanden sind, zum Beispiel vier Spreizelemente, von denen jeweils zwei Spreizelemente für den Anlageflächen-Winkelbereich beidseits der jeweiligen Sollbruchzone oder Bruchtrennfläche zuständig sind, also dort die erfindungsgemäßen Anlageflächen aufweisen. Gerade im Scheitelbereich zwischen diesen Anlageflächen kann - muss aber nicht - ein Spreizelement oder ein Abschnitt eines Spreizelements vorhanden sein. Die Abstützung durch die Stützflächenanordnungen auf die Lageröffnung erfolgt nämlich nur im Bereich der Sollbruchzonen über einen definierten Winkelabstand hinweg.

Die mindestens eine Druckbeaufschlagungsfläche weist zweckmäßigerweise während des Bruchtrennens bezüglich der Längsachse einen Längsabstand zu mindestens einem Längsende der Lageröffnung an einer Stirnseite des Werkstücks auf. Mithin erfolgt also die Druckeinleitung nicht bis zur Stirnseite des Werkstücks hin oder über die gesamte Längserstreckungsrichtung der Lageröffnung, sondern im oberen oder im inneren Bereich der Lageröffnung bezüglich der Längsachse. Bevorzugt ist es, wenn zu beiden Längsenden hin jeweils ein derartiger Längsabstand vorhanden ist.

Es ist aber auch möglich, dass der Freiraum oder die Ausdehnungszone möglichst lang ausgestaltet sind, was bei einem Ausführungsbeispiel in der Zeichnung realisiert ist.

So kann beispielsweise vorgesehen sein, dass die mindestens eine Druckbeaufschlagungsfläche einem Längsende der Lageröffnung zugeordnet ist und zwischen diesem Längsende und dem anderen Längsende der Lageröffnung keine Druckbeaufschlagungsfläche vorgesehen ist. Anders formuliert ist es vorteilhaft, wenn die mindestens eine Druckbeaufschlagungsfläche einem Längsende der Lageröffnung zugeordnet ist, insbesondere unmittelbar an dem Längsende der Lageröffnung wirkt, während sich die Aufnahmezone von der Druckbeaufschlagungsfläche bis zu dem anderen Längsende der Lageröffnung erstreckt. Vorteilhaft ist die Druckbeaufschlagungsfläche an einem Längsendbereich eines jeweiligen Spreizelements angeordnet, der bei einer Betätigung durch den Betätigungskörper entlang einer Vorschubrichtung des Betätigungskörpers zunächst in Richtung der Lageröffnung verdrängt wird, während sich die Aufnahmezone von der Druckbeaufschlagungsfläche weg zu einem Bereich des Spreizelements erstreckt, der erst bei einem weiteren Vorschub des Betätigungskörpers in Richtung der Lageröffnung verdrängt wird.

Die mindestens eine Druckbeaufschlagungsfläche erstreckt sich erfindungsgemäß bezüglich einer Vorschubrichtung des Betätigungskörpers vor der Aufnahmezone. Beispielsweise ist die Druckbeaufschlagungsfläche an einem Längsendbereich des Spreizelements angeordnet, der in Vorschubrichtung des Betätigungskörpers als erstes in Richtung der Lageröffnung druckbeaufschlagt und verlagert wird.

Bevorzugt ist eine Keilwirkung derart, dass die Spreizelemente durch Beaufschlagung voneinander weg in der Art eines Keiles auf die Lageröffnung einwirken, wobei in Bezug auf die Längsachse der Lageröffnung die mindestens eine Druckbeaufschlagungsfläche und die Aufnahmezone hintereinander angeordnet sind.

Es ist vorteilhaft, wenn die Anlageflächen eines Spreizelements oder aller Spreizelemente in einer Abwicklung beispielsweise U-förmig oder H-förmig sind. Eine Abwicklung ist beispielsweise die auf eine Ebene projizierte Mantelfläche eines jeweiligen Spreizelements. Ein Grundschenkel oder Mittelschenkel dieser Abwicklung ist dabei die mindestens eine Druckbeaufschlagungsfläche, während die Seitenschenkel Stützflächen der Stützflächenanordnungen bereitstellen oder sind. Bevorzugt ist es, wenn die mindestens eine Druckbeaufschlagungsfläche einen sich quer zwischen Stützflächen der Stützflächenanordnungen erstreckenden Grundschenkel bildet, beispielsweise den vorgenannten Mittelschenkel einer H-förmigen Anordnung aus Stützflächen und Druckbeaufschlagungsfläche.

In Längsachsrichtung ist es weiterhin vorteilhaft, wenn die Druckbeaufschlagungsfläche so getroffen ist oder die Druckbeaufschlagungsflächen so getroffen sind, dass die Druckbeaufschlagungsflächen insgesamt nur etwa dreiviertel, vorzugsweise nur etwa zwei Drittel und weiter bevorzugt nur etwa die Hälfte oder ein Drittel der Höhe oder Länge der Lageröffnung in Längsachsrichtung während des Bruchtrennens mit Druck beaufschlagen. Besonders bevorzugt ist eine streifenförmige oder sehr schmale Druckbeaufschlagungsfläche. Somit kann beispielsweise eine Ausdehnung der mindestens einen Druckbeaufschlagungsfläche in Bezug auf die Längsachse der Lageröffnung so getroffen sein, dass sie nur etwa 10-20 % der Lageröffnung mit druckbeaufschlagen kann.

Eine vorteilhafte Ausführungsform der Erfindung sieht vor, dass mindestens eine Anlagefläche streifenförmig ist. Es ist auch möglich, dass eine Anlagefläche oder die Anlageflächen eine kreisförmige oder elliptische Gestalt haben, insbesondere die mindestens eine Druckbeaufschlagungsfläche. Jedenfalls ist immer eine möglichst großflächige Anlage der jeweiligen Anlagefläche am Innenumfang der Lageröffnung angestrebt und vorteilhaft. Es versteht sich, dass eine Kombination mehrerer sich quer zur Längsachsrichtung der Lageröffnung erstreckender streifenförmiger oder bogenförmiger Druckbeaufschlagungsflächen möglich ist, die sich beispielsweise in Richtung der Längsachse übereinander befinden. Im Ausführungsbeispiel gemäß der Zeichnung ist nur ein einziger derartiger Anlageflächen-Streifen dargestellt.

Die Spreizelementanordnung ist zweckmäßigerweise an einem Spreizdorn vorgesehen. Der Spreizdorn hat zweckmäßigerweise stirnseitige Einführschrägen, so dass die Spreizelementanordnung leicht in die Lageröffnung eingeführt werden kann.

Das erste Spreizelement ist vorzugsweise der ersten Komponente, das mindestens eine zweite Spreizelement der zweiten Komponente des Werkstücks zugeordnet. Die Spreizelemente sind zweckmäßigerweise so ausgestaltet, dass sie in der Spreizstellung Druck auf die jeweils zugeordnete Komponente des Werkstücks ausüben.

Zwischen dem Betätigungskörper und dem ersten Spreizelement und/oder dem mindestens einen zweiten Spreizelement ist zweckmäßigerweise eine Keilflächenanordnung vorgesehen, über die der Betätigungskörper das erste und/oder zweite Spreizelement betätigt. Der Betätigungskörper ist zweckmäßigerweise durch einen Spreizantrieb antreibbar, zum Beispiel einen elektromotorischen, fluidischen oder kombinierten elektro-fluidischen Spreizantrieb. Es ist möglich, dass beispielsweise das erste Spreizelement ortsfest ist, während das zweite Spreizelement durch die Anordnung von Spreizantrieb und Betätigungskörper zwischen der Positionierstellung und der Spreizstellung betätigbar ist. Es ist aber auch möglich, dass beide oder alle Spreizelemente durch den Spreizantrieb oder den Betätigungskörper betätigbar oder antreibbar sind.

Zweckmäßigerweise ist vorgesehen, dass der Betätigungskörper an einem Abtriebskopf des Spreizantriebs angeordnet ist und der Spreizantrieb einen relativ zu dem Abtriebskopf beweglichen, eine Schlagmasse aufweisenden Schlagkörper zum Erzeugen von Schlägen auf den Abtriebskopf aufweist, und dass der Spreizantrieb einen Impulsantrieb zum Antreiben des Schlagkörpers zu dem Abtriebskopf hin im Rahmen eines Schlagimpulsbetriebs der Bruchtrennvorrichtung umfasst.

Die Bruchtrennvorrichtung ist zweckmäßigerweise zur Anordnung in einer Lageröffnung des Werkstücks, zum Beispiel einem Auge eines Pleuels, ausgestaltet

Vorzugsweise bildet die Bruchtrennvorrichtung einen Bestandteil einer Werkzeugmaschine oder eines Bearbeitungszentrums oder beidem.

Bevorzugt ist an dem mindestens einen Werkstück eine Kerbe im Bereich der Sollbruchzone oder in einem zu der Sollbruchzone winkeligen Abschnitt vorgesehen. Die Kerbe kann beispielsweise eine Laserkerbe sein. Mithin kann also die Bruchtrennvorrichtung eine entsprechende Laservorrichtung zum Herstellen einer derartigen Kerbe umfassen. Es ist aber auch möglich, dass die Kerbe als eine Fräsung hergestellt ist. Sie kann auch vorab am Werkstück vorhanden sein, beispielsweise wenn dieses als ein Sinterbauteil hergestellt ist oder ein derartiges Sinterbauteil ist. Eine Kerbe kann auch eine sogenannte Räumkerbe sein

Die Bruchtrennvorrichtung ist zweckmäßigerweise zur Bearbeitung von nur an einer Stirnseite oder nur an seinen beiden Stirnseiten mit einer Kerbe versehenen Werkstücken, insbesondere Pleueln, vorgesehen. Vorzugsweise ist im Bereich der Sollbruchzone der Lageröffnung oder am Innenumfang der Lageröffnung keine Kerbe vorhanden. Zweckmäßigerweise bilden die Spreizelemente mit der erfindungsgemäßen Anordnung von Druckbeaufschlagungsfläche und Stützflächenanordnung und ein damit zu bearbeitendes Werkstück mit nur stirnseitiger Kerbung einen Bestandteil einer Gesamtanordnung.

Nachfolgend wird ein Ausführungsbeispiel der Erfindung anhand der Zeichnung erläutert. Es zeigen:

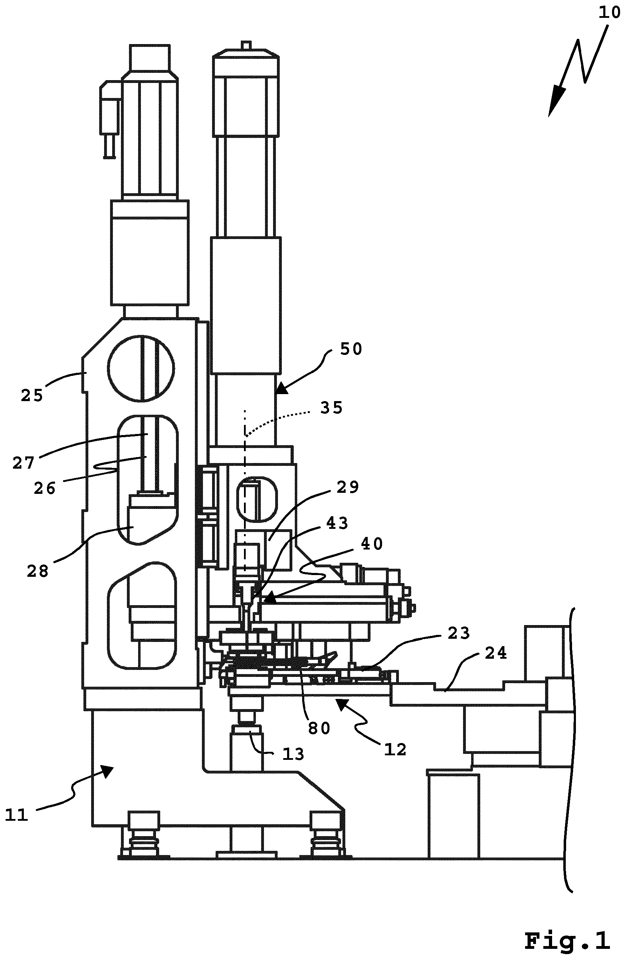

- Figur 1: eine Seitenansicht einer Werkzeugmaschine, die eine erfindungsgemäße Bruchtrennvorrichtung aufweist,

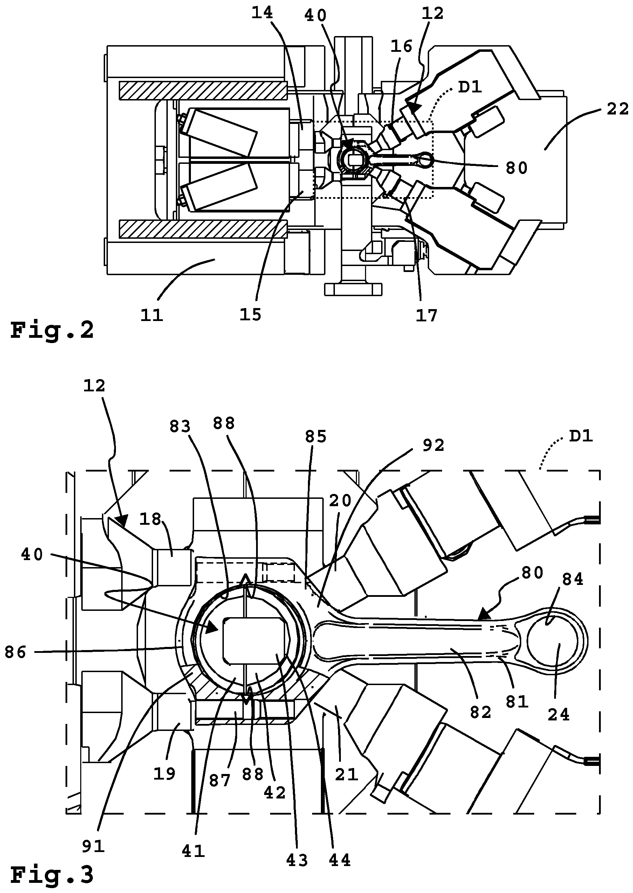

- Figur 2: eine frontale Draufsicht auf ein Unterteil der Werkzeugmaschine gemäß Figur 1 sowie eine Bruchtrennvorrichtung und eine Werkstück-Halteeinrichtung, von der in
- Figur 3: ein Detail D1 aus Figur 2 dargestellt ist,
- Figur 4: eine perspektivische Schrägansicht auf eine Spreizelementanordnung der Bruchtrennvorrichtung,
- Figur 5: eine perspektivische Schrägansicht auf einen vorderen Abschnitt eines Pleuels, wobei Kontaktflächen der Spreizelementanordnung markiert sind,
- Figur 6: das Pleuel gemäß Figur 5 von oben und
- Figur 7: das Pleuel gemäß Figur 5, 6 im Querschnitt etwa entlang einer Schnittlinie A-A in Figur 6,
- Figur 8: eine perspektivische Schrägansicht entsprechend etwa Figur 4 auf eine weitere Spreizelementanordnung der Bruchtrennvorrichtung,
- Figur 9: eine Draufsicht auf ein Pleuel während der Bearbeitung durch die Spreizelementanordnung gemäß Figur 8, und
- Figur 10: das Pleuel gemäß Figur 9 im Querschnitt etwa entlang einer Schnittlinie B-B in Figur 9.

Eine in der Zeichnung schematisch dargestellte Werkzeugmaschine 10, die auch ein Bearbeitungszentrum oder ein Bestandteil eines Bearbeitungszentrums sein kann, weist eine Bruchtrennvorrichtung 40 zum Bruchtrennen von Werkstücken 80 auf. Man könnte die Werkzeugmaschine 10 auch als Crack-Maschine bezeichnen.

Die Werkzeugmaschine 10 ist dazu vorgesehen, beispielsweise Pleuel 81 als Werkstücke 80 zu bearbeiten, wobei z.B. ein alternatives Anwendungsfeld der Erfindung auch beispielsweise das Cracken von Zylinderdeckeln von einem Motorblock ist. Auch andere Werkstücke können im Prinzip nach dieser Art bruchgetrennt werden.

Die Pleuel 81 umfassen einen Pleuelschaft 82, der am einen Endbereich ein sogenanntes kleines Auge 84, also eine Lageröffnung, Lagerbohrung oder Lagerausnehmung, sowie ein großes Auge 83 aufweist, ebenfalls eine Lageröffnung 89, Lagerbohrung oder Lagerausnehmung. Die beiden Lageröffnungen oder Augen 83 und 84 sind beispielsweise zur drehbaren Verbindung mit einer Kurbelwelle und einem Kolben vorgesehen (nicht dargestellt).

Im Bereich des großen Auges 83 bzw. der Lageröffnung 89 wird mit der Werkzeugmaschine 10 die nachfolgende Bearbeitung durchgeführt:
Von einem Pleuelfuß 85, einer zweiten Komponente 92 des Werkstücks 80, wird mittels der Bruchtrennvorrichtung 40 eine erste Komponente 91 des Werkstücks 80, nämlich ein Pleueldeckel 86, abgetrennt, so dass sich an den Seitenschenkeln 93 des Pleuelfußes 85 und den Seitenschenkeln des Pleueldeckels 86, die jeweils das große Auge 83 seitlich begrenzen, Bruchtrennflächen 90 ausbilden. Diese Bruchtrennflächen 90 passen formschlüssig zueinander, da die Oberflächentopographie bei beiden Bruchtrennflächen im Idealfall formschlüssig zueinander passend oder im Sinne zueinander passender positiver und negativer Flächen identisch ist.

Die Werkzeugmaschine 10 und/oder das Bearbeitungszentrum können ein Kerbwerkzeug, zum Beispiel zum Laser-Kerben, aufweist, was in der Zeichnung jedoch nicht dargestellt ist. Jedenfalls sind vorteilhaft im Bereich der späteren Bruchtrennflächen oder -linien jeweils eine das Bruchtrennen erleichternde Kerbe 88 vorgesehen. Die Kerben 88 könnten aber auch schon von vorneherein an dem Pleuel 81 vorgesehen sein, beispielsweise wenn dieses als ein Gussteil oder Sinterteil hergestellt ist.

Zwar wäre es prinzipiell möglich, eine Kerbe im Bereich der Lageröffnung 89 vorzusehen. Besonders bevorzugt ist jedoch, wenn an einer oder beiden Stirnseiten 102 und/oder 101 des Werkstücks 80 eine Kerbe 88 vorgesehen ist, jedoch im Bereich der Lageröffnung 89 selbst keine Kerbe. Insbesondere ist keine Kerbe am Innenumfang der Lageröffnung 89 vorgesehen.

Die Werkzeugmaschine 10 umfasst eine Maschinenbasis 11, zum Beispiel ein Maschinenbett, an der eine Werkstück-Halteeinrichtung 12 angeordnet ist. Mit der Werkstück-Halteeinrichtung können Werkstücke, nämlich das Werkstück 80 oder das Pleuel 81, gehalten werden, während die weitere Bearbeitung durch die Bruchtrennvorrichtung 40 stattfindet. Die Werkstück-Halteeinrichtung 12 kann einen Bestandteil der Bruchtrennvorrichtung 40 bilden.

Von unten her wird das Pleuel 81 oder Werkstück 80 von einer Werkstück-Stützeinrichtung 13 abgestützt. Die Stützeinrichtung 13 kann direkt an dem Werkstück 80 angreifen, dieses also direkt abstützen, oder auch beispielsweise eine Kassette 23, in der das Werkstück 80/Pleuel 81 angeordnet ist.

Während der Bearbeitung durch die Bruchtrennvorrichtung 40 ist das Pleuel 81 durch seitlich wirkende Abstützeinrichtungen 14, 15, 16, 17 abgestützt, deren Stützköpfe 18, 19 beispielsweise von der Seite des Pleueldeckels 86 her stützend wirken, während die Stützkörper 20 und 21 der Abstützeinrichtungen 16, 17 von der anderen Seite, nämlich vom Pleuelfuß 85 her abstützen. Somit ist jedenfalls das Pleuel 81 während der Bruchtrenn-Bearbeitung sicher gehalten.

Vorteilhaft greift ein Stützelement 24, z.B. ein Stützdorn, in das kleine Auge 84 ein.

Die Werkzeugmaschine 10 umfasst weiterhin einen Rundtisch 22 oder eine sonstige Werkstück-Fördereinrichtung, mit der Werkstücke, nämlich Werkstücke 80 oder Pleuel 81 der Bruchtrennvorrichtung 40 zugeführt werden können bzw. auch von der Bruchtrennvorrichtung 40 wieder weg geführt werden können. Auf dem Rundtisch 22 sind beispielsweise Kassetten 23 angeordnet.

Vor die Maschinenbasis 11 steht ein Ständer 25 nach oben vor, der beispielsweise in der Art eines Turms, eines Tragrahmens oder dergleichen ausgestaltet ist. Der Ständer 25 trägt eine Führungsanordnung 26 oder bildet eine solche. Die Führungsanordnung 26 umfasst eine Linearführung 27, an der die Bruchtrennvorrichtung 40 linear geführt ist. Mithilfe eines Positionierantriebs 28, beispielsweise eines elektrischen Antriebs oder pneumatischen Antriebs oder fluidischen Antriebs, kann die Bruchtrennvorrichtung 40 zwischen einer unteren Arbeitsposition, in der sie zur Bearbeitung des Werkstücks 80 oder Pleuels 81 bereitsteht und einer oberen Stellung, in der die Bruchtrennvorrichtung 40 von dem Werkstück 80/Pleuel 81 entfernt ist und ein Werkstückwechsel möglich ist, indem beispielsweise der Rundtisch 22 weiter schaltet und ein unbearbeitetes Werkstück zur weiteren Bearbeitung durch die Bruchtrennvorrichtung 40 zuführt, verstellt werden. Die Bruchtrennvorrichtung 40 ist z.B. an einem an der Linearführungen 27 oder der Führungsanordnung 26 linear geführten Schlitten 29 angeordnet.

Die Bruchtrennvorrichtung 40 umfasst ein erstes Spreizelement 41 und ein zweites Spreizelement 42 einer Spreizelementanordnung 45.

Die Spreizelemente 41 und/oder 42 können durch einen Betätigungskörper 43 nach radial außen verdrängt werden, wobei sie den Pleueldeckel 86 vom Pleuelfuß 85 des Pleuels 81 abtrennen. Dann entsteht im Bereich der Kerben 88 eine Bruchtrennfläche, wie oben bereits erläutert. Im Ausführungsbeispiel wirkt eine nicht dargestellte Keilflächenanordnung zwischen dem Betätigungskörper 43 und dem zweiten Spreizelement 42, so dass das zweite Spreizelement 42 in Richtung des Pleuelfußes 85, also zweiten Komponente 92 des Werkstücks 80, gedrückt wird und sich an dem Pleuelfuß 85, wobei die erste Komponente 91, der Pleueldeckel 86 sozusagen abgesprengt wird.

Die voneinander getrennten Komponenten 91 und 92 werden in einem späteren Arbeitsschritt, beispielsweise wenn die Werkzeugmaschine 10 einen Bestandteil eines Bearbeitungszentrums bildet, wieder aneinander gefügt und beispielsweise miteinander verschraubt. Für Schrauben sind z.B. die beiden Seitenschenkel 93 durchsetzende Montagekanäle 87 oder Bohrungen vorgesehen.

Die Spreizelemente 41, 42 begrenzen eine Führungsaufnahme 44 zur Aufnahme und Führung des Betätigungskörpers 43. Der Betätigungskörper 43 umfasst beispielsweise einen sogenannten Spreizkeil.

Die beiden Spreizelemente 41, 42 haben an ihrem in Druck-Kontakt mit der Lageröffnung 89 kommenden Außenumfang 46 eine Außenumfangskontur, die mit einer Innenumfangskontur an einem Innenumfang 94 der Lageröffnung 89, des Auges 83, korrespondiert. Mithin können also die Spreizelemente 41, 42 im Wesentlichen formschlüssig passend am Innenumfang 94 des Auges 83 anliegen. Die Spreizelemente 41, 42 bilden beispielsweise Spreizbacken.

Der Betätigungskörper 43 ist durch einen Spreizantrieb 50 antreibbar, der z.B. einen ein pneumatischen Zylinder, einen hydraulischen Antrieb oder dergleichen anderen fluidischen Antrieb aufweist. Alternativ wäre auch beispielsweise ein Linearantrieb, zum Beispiel elektrischer Linearantrieb, möglich. Der Spreizantrieb 50 kann auch einen Impulsantrieb und/oder eine Schlagmasse umfassen.

Die beiden Spreizelemente 41, 42 haben jeweils im Bereich ihrer Stirnseite eine Einführschräge 47, die das Einführen in die Lageröffnung 89 erleichtern. Wenn der Betätigungskörper 43 oder Spreizkeil von den Spreizelementen 41 und 42 weg verstellt ist, nehmen sie eine Positionierstellung ein, in welcher die Spreizelementanordnung 45, die insgesamt einen Spreizdorn 48 bildet, in die Lageröffnung 89 entlang einer Längsachse 35 einführbar ist. Sodann wird durch den Spreizantrieb 50 der Betätigungskörper 43 zu den Spreizelementen 41 und 42 hin verstellt, wodurch diese nach radial außen, quer zur Längsachse 35 relativ zueinander verstellt werden (Pfeile 61) und eine Spreizstellung einnehmen, bei der die beiden Spreizelemente 41 und 42 eine Druckkraft in der Lageröffnung 89 nach radial außen auf die Komponenten 91 und 92 des Werkstücks 80 ausüben.

Die Spreizelemente 41 und 42 sind mit Haltbereichen 49 z.B. am Schlitten 29 quer zur Längsachse 35 beweglich gelagert.

Die beiden Spreizelemente 41 und 42 bilden den Spreizdorn 48.

Die Krafteinleitung bzw. die Druckkraft beim Bruchtrennen erfolgt in der Lageröffnung 89 im Bereich der Bruchtrennflächen 90, also im Bereich einander gegenüberliegender Sollbruchzonen 95, dort wo bereits Kerben 88 angebracht sind.

Die Außenumfänge 46 der beiden Spreizelemente 41, 42 sind im Wesentlichen zylindrisch. Dies korrespondiert mit der zylindrischen Innenkontur des Innenumfangs 94 des Werkstücks 80 im Bereich der Lageröffnung 89. Insofern würde also an sich die Gesamt-Außenkontur der beiden Teil-Außenumfänge 46 exakt in die Lageröffnung 89 passen, so dass dort an sich ein gleichmäßiger Druck resultieren würde. Erfindungsgemäß jedoch ist gerade dies nicht gewünscht, sondern die Krafteinleitung soll entfernt von den beiden Sollbruchzonen 95 oder abseits der Sollbruchzonen 95 geschehen. Im Bereich der Sollbruchzonen 95 ist vielmehr eine Abstützung der Lageröffnung 89 durch die Spreizelemente 41, 42 gegeben.

Vor einen Außenumfang 46 der Spreizelemente 41, 42 grundsätzlich definierende Außenumfangsfläche 51 stehen Anlageflächen bildende Stützflächen 53, 55 sowie Druckbeaufschlagungsflächen 52, 54 nach radial außen vor, d.h. dass die Spreizelemente 41, 42 mit den Anlageflächen oder den Stützflächen 53, 55 sowie den Druckbeaufschlagungsflächen 52, 54 in Anlage mit dem Innenumfang 94 der Lageröffnung 89 beim Bruchtrennen kommen, wobei die Stützflächen 53, 55 und die Druckbeaufschlagungsflächen 52, 54 auf Anlagebereiche 96-99 des Innenumfangs 94 der Lageröffnung 89 einwirken oder an diesen anliegen. Die Anlagebereiche 96-99 sind ebenfalls flächig, korrespondierend mit den Stützflächen 53, 55 und den Druckbeaufschlagungsflächen 52, 54.

Die Stützflächen 53, 55 und die Druckbeaufschlagungsflächen 52, 54 stehen erhaben vor die Außenumfangsfläche 51 vor. Die Stützflächen 53, 55 und die Druckbeaufschlagungsflächen 52, 54 haben eine Außenkontur, die der Außenumfangsfläche 51 im Wesentlichen entspricht, also etwa zylindrisch ist. Dadurch liegen die Stützflächen 53, 55 und die Druckbeaufschlagungsflächen 52, 54 flächig an den Anlagebereich 96-99 an, üben also gleichmäßig Druck aus.

Zwischen den Stützflächen 53, 55 und den Druckbeaufschlagungsflächen 52, 54 sind Aufnahmezonen 56 vorgesehen, in die hinein sich Abschnitte 189 der Lageröffnung 89 verformen können.

Die Stützflächen 53, 55 sind Bestandteile von Stützflächenanordnungen 57, die die Lageröffnung 89 im Bereich der Sollbruchzonen 95 bzw. bei den Bruchtrennflächen 90 abstützen.

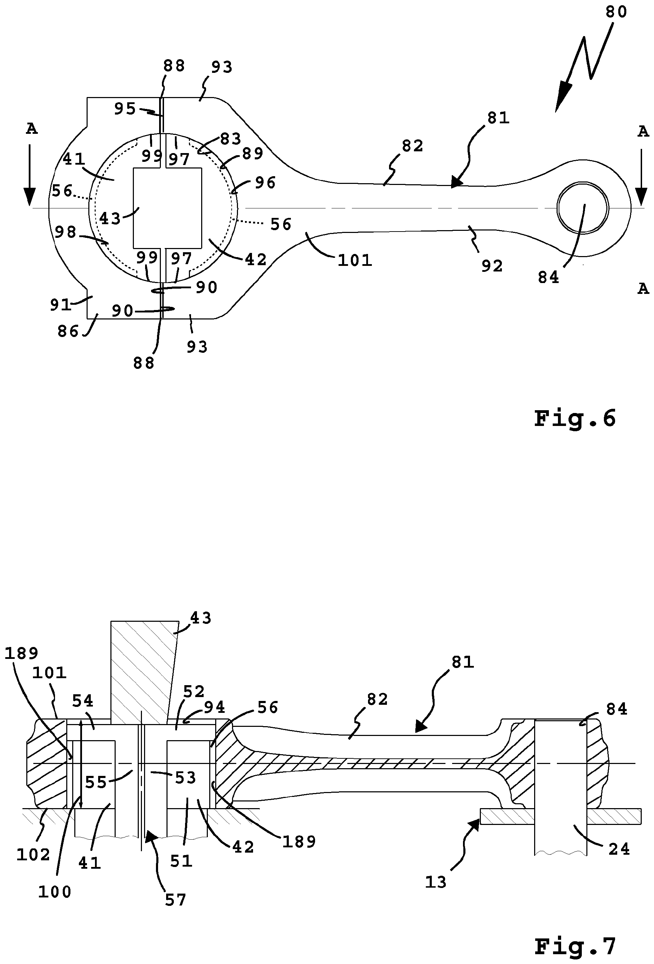

Die Stützflächen 53, 55 sind beispielsweise streifenförmig. Eine jeweilige Stützflächen 53, 55 erstreckt sich zweckmäßigerweise etwa über die gesamte Höhe 100 einer Lageröffnung 89 (bezüglich deren Längsachse 35). Mithin ist es vorteilhaft, wenn die Stützflächen 53, 55 die Sollbruchzonen 95 im Wesentlichen über deren gesamte Länge abstützen. Die Stützflächen 53, 55 verlaufen beispielsweise zwischen den Längsendbereichen der Lageröffnung 89, also zwischen einer oberen Stirnseite 101 und einer gegenüberliegenden unteren Stirnseite 102 des Werkstücks 80. Allerdings ist bei dieser Betrachtung zu berücksichtigen, dass die Stützflächen 53, 55, ersichtlich beispielsweise aus Figur 7, optional nicht bis zur oberen Stirnseite 101 verlaufen können, weil nämlich die Spreizelemente 41, 42 nicht vollständig in die Lageröffnung 89 eintauchen, also nicht bis zur Stirnseite 101 vorstehen. Der jedoch in Eingriff befindliche Bereich der Spreizelemente 41, 42 weist vorzugsweise über seine gesamte Länge die Stützflächen 53, 55 auf oder in anderer Formulierung erstrecken sich die Stützflächen 53, 55 vorzugsweise über eine gesamte in Eingriff mit der Lageröffnung 89 befindliche Länge der Spreizelemente 41, 42.

Ohne weiteres wäre es aber auch möglich, dass die Stützflächen 53, 55 die gesamte Länge der Sollbruchzonen 95 bezüglich der Längsachse 35 der Lageröffnung 89 abstützen, was in der Zeichnung nicht dargestellt ist.

Die Druckbeaufschlagungsflächen 52, 54 sind vorliegend kreisringförmig. Sie erstrecken sich zweckmäßigerweise über den gesamten Außenumfang der Spreizelemente 41, 42. Bevorzugt ist es, wenn die Druckbeaufschlagungsflächen 52, 54 am einen Längsendbereich der Lageröffnung 89 zur Anlage kommen, während sich die Aufnahmezone 56 zur Stirnseite 102 hin erstreckt. Wenn also der keilförmige Betätigungskörper 43 die Spreizelemente 41, 42 im Sinne einer Bewegung voneinander weg (Pfeile 61) beaufschlagt, wird zunächst der die Druckbeaufschlagungsfläche 52, 54 aufweisende Abschnitt des Spreizelements 41, 42 in Richtung der Pfeile 61 bewegt, während die Krafteinleitung im Bereich der Aufnahmezone 56 noch nicht oder in geringerem Maße erfolgt. Dadurch werden die Komponenten 91, 92 optimal in einer Bewegungsrichtung voneinander weg keilförmig kraftbeaufschlagt, wobei die Abschnitte 189 der Lageröffnung 89 in die Aufnahmezonen 56 hinein ausweichen können.

Jeweils zwei Stützflächen 53, 54 erstrecken sich unmittelbar beidseits neben einer der Bruchtrennflächen 90. Ein solches Paar von Stützflächen 53, 54 bildet eine Stützflächenanordnung 57.

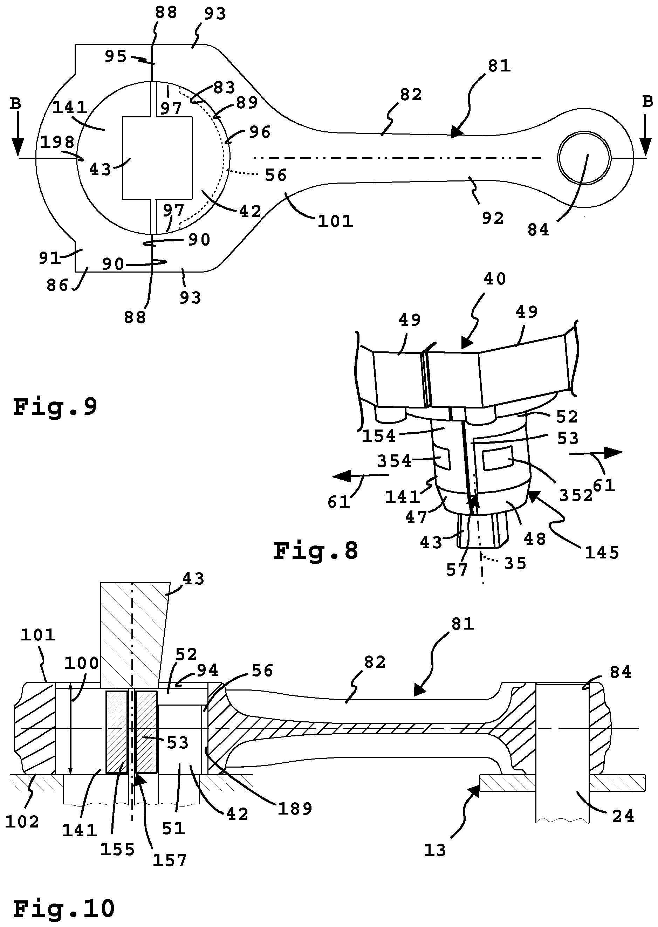

Am Ausführungsbeispiel gemäß Figuren 8-10 wird deutlich, dass es ausreichen kann, wenn an einem der Spreizelemente 41 oder 42 eine erfindungsgemäß ausgestaltete Aufnahmezone 56 vorgesehen ist. Beispielsweise hat ein anstelle des Spreizelements 41 zum Einsatz kommendes Spreizelement 141 einer Spreizelementanordnung 145 keine Aufnahmezone, während das andere Spreizelement 42 in bereits erwähnte Weise die Aufnahmezone 56 aufweist. Der gesamte Außenumfang 46 des Spreizelements 141 stützt sich am Innenumfang der Lageröffnung 89 im Bereich der Komponente 91 ab. Somit bildet der Außenumfang 46 des Spreizelements 141 zumindest im Bereich der Sollbruchzone 95, d.h. am Längsendbereich seiner halbkreisförmigen Mantelfläche Stützflächen 155 aus, die mit den Stützflächen 53 des Spreizelements 42 zusammen die Stützflächenanordnungen 157 darstellen.

Der Abschnitt 189 der anderen Komponente 92 kann in die Aufnahmezone 56 des Spreizelements 42 ausweichen, wenn die Bruchtrennung erfolgt.

Es versteht sich, dass auch andere Geometrien einer jeweiligen Druckbeaufschlagungsfläche möglich sind. Beispielsweise könnte eine Druckbeaufschlagungsfläche 252 anstelle oder in Ergänzung der Druckbeaufschlagungsfläche 52 am Spreizelement 42 vorgesehen sein. Die Druckbeaufschlagungsfläche 252 verläuft beispielsweise schräg bezüglich der Längsachse 35 bzw. schräg einer Längsachse des Spreizelements 42, entlang derer es in die Lageröffnung 89 eintaucht.

Auch eine rechtwinkelig quer bezüglich dieser genannten Längsachse eines Spreizelements angeordnete Druckbeaufschlagungsfläche in der Art beispielsweise einer Druckbeaufschlagungsfläche 254 ist ohne weiteres möglich. Die Druckbeaufschlagungsfläche 254 könnte beispielsweise anstelle oder in Ergänzung der Druckbeaufschlagungsfläche 51 vorgesehen sein. In Bezug auf die Höhe 100 der Lageröffnung 89 ist die Druckbeaufschlagungsfläche 254 beispielsweise etwa längsmittig angeordnet, das heißt sie wirkt etwa in der Mitte der Lageröffnung 89 bezogen auf deren Längsachse 35. Somit ist also beispielsweise bezüglich der Längsachse 35 jeweils oberhalb und unterhalb eine Aufnahmezone 56 vorgesehen, in die hinein sich der Innenumfang der Lageröffnung 89 beim Bruchtrennen verformen kann.

Exemplarisch sind in Figur 8 noch weitere Varianten von Druckbeaufschlagungsflächen dargestellt. So könnte beispielsweise anstelle oder in Ergänzung der Druckbeaufschlagungsfläche 52 eine Druckbeaufschlagungsfläche 352 vorgesehen sein, die insgesamt einen Abstand zu der Stützfläche 53 aufweist, mit dieser also nicht verbunden ist. Zwischen der Stützfläche 53 und dem Umfang der Druckbeaufschlagungsfläche 352 ist damit eine Aufnahmezone gegeben, in die hinein sich die Lageröffnung 89 beim Bruchtrennen verformen kann. Die Druckbeaufschlagungsfläche 352 ist beispielsweise streifenförmig. In Bezug auf die Längsachse 35 kann sie einen Abstand aufweisen. Es ist möglich, dass sich die Druckbeaufschlagungsfläche 352 nicht bis zum Scheitelpunkt, d.h. zum maximalen Abstand zwischen den Stützflächen 53, erstreckt.

Es kann auch eine Druckbeaufschlagungsfläche 354 bei dem Spreizelement 141 vorgesehen sein. Die Druckbeaufschlagungsfläche 354 erstreckt sich ähnlich wie die Druckbeaufschlagungsfläche 352 nur über ein Winkelsegment des Außenumfangs 46. Allerdings ist auch bei der Druckbeaufschlagungsfläche 352 die Anordnung so getroffen, dass der Außenumfang 46 bzw. die Außenumfangsfläche im Bereich der Sollbruchzonen 95 als Stützfläche ausgestaltet ist und somit einen Bestandteil der Stützflächenanordnung 157 bildet.

Ferner kann beispielsweise mindestens eine der Druckbeaufschlagungsflächen 52, 54 in Umfangsrichtung der Spreizelemente 41, 42 mit mindestens einer Unterbrechung 58 versehen sein, so dass beispielsweise zwei oder drei oder weitere streifenförmige und/oder ringsegmentartige Druckbeaufschlagungsflächen ausgebildet sind, die sich über den Außenumfang 46 hinweg erstrecken und quer zur Längsachse 35 verlaufen.

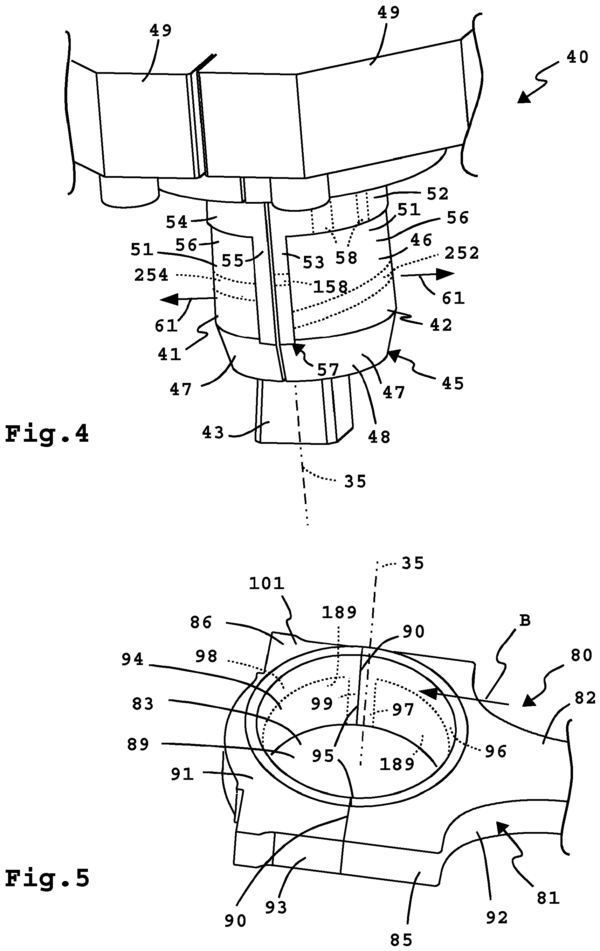

Auch bei den Stützflächen 53, 55 sind Unterbrechungen 158 möglich, was exemplarisch in Figur 4 eingezeichnet ist.

An dieser Stelle sei noch erwähnt, dass die vorgenannten Ausgestaltungen der Spreizelemente 41, 141 und 42 als Hinweis verstanden werden sollen, dass eine Bruchtrennvorrichtung gemäß der Erfindung unterschiedlich ausgestaltete, insbesondere unterschiedlich geometrisch ausgestaltete Druckbeaufschlagungsflächen und/oder Stützflächen haben kann. Die Spreizelemente können in Bezug auf die Stützflächen und Druckbeaufschlagungsflächen identisch ausgestaltet sein. Es ist aber auch möglich, dass eine Spreizelementanordnung mehrere, mindestens zwei, in Bezug auf die Druckbeaufschlagungsflächen oder Stützflächen unterschiedlich ausgestaltete Spreizelemente haben kann.

## Patentansprüche

1. Bruchtrennvorrichtung zum Bruchtrennen eines Werkstücks (80), insbesondere eines Pleuels (81), mit einer Spreizelementanordnung (45) mit einem ersten Spreizelement (41) und mindestens einem zweiten Spreizelement (42), sowie einem Betätigungskörper (43) zum Betätigen der Spreizelementanordnung (45) aus einer Positionierstellung in eine Spreizstellung zum Abtrennen einer ersten Komponente (91) des Werkstücks (80), insbesondere eines Pleueldeckels (86), von einer zweiten Komponente (92) des Werkstücks (80), insbesondere einem Pleuelfuß (85), wobei die Spreizelemente (41, 42) in der Positionierstellung entlang einer Längsachse (35) in eine Lageröffnung (89) des Werkstücks (80) einführbar sind und in der Spreizstellung mit Anlageflächen an ihrem Außenumfang (46) gegen einen Innenumfang (94) der Lageröffnung (89) drücken, so dass die erste Komponente (91) von der zweiten Komponente (92) des Werkstücks (80) unter Bildung von Bruchtrennflächen (90) wegbricht, wobei sich die Bruchtrennflächen (90) ausgehend von Sollbruchzonen (95) radial von der Lageröffnung (89) weg erstrecken, wobei die Anlageflächen der Spreizelementanordnung (45) mindestens eine Stützflächenanordnung (57) zur Abstützung der ersten Komponente (91) und der zweiten Komponente (92) unmittelbar an einer der Sollbruchzonen der Lageröffnung (89) und mindestens eine Druckbeaufschlagungsfläche (52, 54) zur Druckbeaufschlagung der Lageröffnung (89) für das Abtrennen der ersten Komponente (91) von der zweiten Komponente (92) des Werkstücks (80) umfassen, und wobei die mindestens eine Druckbeaufschlagungsfläche (52, 54) und die mindestens eine Stützflächenanordnung (57) vor eine Aufnahmezone (56) der Spreizelementanordnung (45) vorstehen, in die hinein sich ein Abschnitt der Lageröffnung (89) beim Abtrennen der ersten Komponente (91) von der zweiten Komponente (92) verformen kann, **dadurch gekennzeichnet, dass** mindestens eine Stützfläche der mindestens einen Stützflächenanordnung (57) eine streifenförmige Gestalt zur Abstützung der Sollbruchzone entlang einer Längsachse der Lageröffnung (89) aufweist, und dass sich die mindestens eine Druckbeaufschlagungsfläche (52, 54) bezüglich einer Vorschubrichtung des Betätigungskörpers (43) vor der Aufnahmezone (56) erstreckt.

2. Bruchtrennvorrichtung nach Anspruch 1, **dadurch gekennzeichnet, dass** die mindestens eine Stützflächenanordnung (57) eine erste Stützfläche (53) und eine zweite Stützfläche (55) zur Anlage der ersten Komponente (91) und der zweiten Komponente (92) beidseits der Bruchtrennfläche (90) umfasst.

3. Bruchtrennvorrichtung nach Anspruch 1 oder 2, **dadurch gekennzeichnet, dass** die Anlageflächen für mindestens zwei oder jede Sollbruchzone (95) zwischen der ersten Komponente (91) und der zweiten Komponente (92) jeweils eine Stützflächenanordnung (57) aufweisen.

4. Bruchtrennvorrichtung nach einem der vorhergehenden Ansprüche, **dadurch gekennzeichnet, dass** die mindestens eine Stützflächenanordnung (57) zur im Wesentlichen, insbesondere bezüglich einer Längsachse (35) der Lageröffnung (89), vollständigen oder vollständigen Abstützung der Lageröffnung (89) in einem Ausgangsbereich der Bruchtrennfläche oder entlang einer Ausgangslinie der Bruchtrennfläche ausgestaltet ist.

5. Bruchtrennvorrichtung nach einem der vorhergehenden Ansprüche, **dadurch gekennzeichnet, dass** die mindestens eine Stützflächenanordnung (57) mindestens eine Stützfläche aufweist, die sich im Wesentlichen über eine vollständige Länge der Lageröffnung (89) bezüglich deren Längsachse (35) von einem ersten Längsende der Lageröffnung (89) zu einem zweiten Längsende der Lageröffnung (89) erstreckt.

6. Bruchtrennvorrichtung nach einem der vorhergehenden Ansprüche, **dadurch gekennzeichnet, dass** mindestens ein Spreizelement zur im Wesentlichen vollflächigen Abstützung der Lageröffnung (89) ausgestaltet ist und/oder eine die Lageröffnung (89) über ihre gesamte Länge oder die gesamte Länge des Spreizelements im Bereich der Lageröffnung (89) und/oder ihren gesamten Innenumfang zwischen den Sollbruchzonen abstützende Anlagefläche aufweist und/oder keine Aufnahmezone (56) aufweist, in die hinein sich die Lageröffnung (89) beim Bruchtrennen verformen kann.

7. Bruchtrennvorrichtung nach einem der vorhergehenden Ansprüche, **dadurch gekennzeichnet, dass** die mindestens eine Druckbeaufschlagungsfläche (52, 54) eine Druckbeaufschlagungsfläche (52, 54) oder Druckbeaufschlagungszone in einem maximalen Abstand zwischen den Sollbruchzonen oder in einem Scheitelbereich des Spreizelements zwischen den Sollbruchzonen oder zwischen zwei jeweils einer Sollbruchzone zugeordneten Stützflächenanordnungen (57) aufweist.

8. Bruchtrennvorrichtung nach einem der vorhergehenden Ansprüche, **dadurch gekennzeichnet, dass** sich die mindestens eine Druckbeaufschlagungsfläche (52, 54) bogenförmig oder ringförmig zwischen den Sollbruchzonen erstreckt.

9. Bruchtrennvorrichtung nach einem der vorhergehenden Ansprüche, **dadurch gekennzeichnet, dass** die mindestens eine Druckbeaufschlagungsfläche (52, 54) zueinander beabstandete Abschnitte aufweist.

10. Bruchtrennvorrichtung nach einem der vorhergehenden Ansprüche, **dadurch gekennzeichnet, dass** die mindestens eine Druckbeaufschlagungsfläche (52, 54) mit einer Stützfläche der Stützflächenanordnung (57) verbunden ist und/oder eine Anlagefläche einen die Druckbeaufschlagungsfläche (52, 54) bildenden Abschnitt und einen eine Stützfläche der Stützflächenanordnung (57) bildenden Abschnitt aufweist.

11. Bruchtrennvorrichtung nach einem der vorhergehenden Ansprüche, **dadurch gekennzeichnet, dass** ein Außenradius einer oder aller der Anlageflächen einem Innenradius an einem jeweiligen Abschnitt des Innenumfangs (94) der Lageröffnung (89) exakt oder im Wesentlichen entspricht und/oder dass die eine oder alle Anlageflächen zylindrisch sind und/oder an eine zur flächigen Anlage an einer Innenumfangskontur der Lageröffnung (89) geeignete Außenumfangskontur aufweisen und/oder dass eine oder alle Anlageflächen bezüglich der Längsachse (35) der Lageröffnung (89) keine Krümmung aufweisen oder eine der Krümmung des Innenumfangs (94) der Lageröffnung (89) entsprechende Krümmung, so dass die jeweilige Anlagefläche am jeweiligen Innenumfang-Abschnitt flächig anliegt.

12. Bruchtrennvorrichtung nach einem der vorhergehenden Ansprüche, **dadurch gekennzeichnet, dass** das erste Spreizelement (41) und/oder das mindestens eine zweite Spreizelement (42) einen halbkreisförmigen Außenumfang (46) aufweist, wobei die Stützflächenanordnungen (57) oder eine Stützfläche mindestens einer Stützflächenanordnung (57) dieses Spreizelements (41, 42) im Bereich der jeweiligen Längsenden des Halbkreises vorgesehen sind und/oder die mindestens eine Druckbeaufschlagungsfläche (52, 54) im Bereich des Scheitelpunktes des Außenumfangs (46) des jeweiligen Spreizelements (41, 42) vorgesehen ist.

13. Bruchtrennvorrichtung nach einem der vorhergehenden Ansprüche, **dadurch gekennzeichnet, dass** mindestens eine Druckbeaufschlagungsfläche (52, 54) während des Bruchtrennens bezüglich der Längsachse (35) einen Längsabstand (58) zu mindestens einem Längsende der Lageröffnung (89) an einer Stirnseite (101) des Werkstücks (80) aufweist und/oder die mindestens eine Druckbeaufschlagungsfläche (52, 54) einem Längsende der Lageröffnung (89) zugeordnet ist und sich die Aufnahmezone (56) von der Druckbeaufschlagungsfläche (52, 54) bis zu dem anderen Längsende der Lageröffnung (89) erstreckt und/oder dass die Spreizelemente (41, 42) zur Einwirkung in der Art eines Keiles auf die Lageröffnung (89) ausgestaltet sind, indem bezüglich der Längsachse (35) der Lageröffnung (89) die mindestens eine Druckbeaufschlagungsfläche (52, 54) und die Aufnahmezone (56) hintereinander angeordnet sind.

14. Bruchtrennvorrichtung nach einem der vorhergehenden Ansprüche, **dadurch gekennzeichnet, dass** mindestens eine Anlagefläche oder alle Anlageflächen streifenförmig oder kreisringförmig sind und/oder dass die mindestens eine Druckbeaufschlagungsfläche (52, 54) einen sich quer zwischen Stützflächen der Stützflächenanordnungen (57) erstreckenden Grundschenkel bildet und/oder dass sie zur Bearbeitung von insbesondere ausschließlich an einer Stirnseite mit einer Kerbe im Bereich der Bruchtrennfläche (90) versehenen Werkstücken (80) vorgesehen ist.

## Claims

1. Fracture separation device for the fracture separation of a workpiece (80), in particular a connecting rod (81), with a spreading element assembly (45) having a first spreading element (41) and at least one second spreading element (42) as well as an actuating body (43) for actuating the spreading element assembly (45) from a positioning position into a spreading position for separating a first component (91) of the workpiece (80), in particular a connecting rod cap (86), from a second component (92) of the workpiece (80), in particular a connecting rod big end (85), wherein the spreading elements (41, 42) can be inserted into a bearing opening (89) of the workpiece (80) along a longitudinal axis (35) in the positioning position and press with contact surfaces at their outer circumference (46) against an inner circumference (94) of the bearing opening (89) in the spreading position, so that the first component (91) breaks away from the second component (92) of the workpiece (80) while forming fracture separation surfaces (90), wherein the fracture separation surfaces (90) extend from predetermined fracture zones (95) radially away from the bearing opening (89), wherein the location surfaces of the spreading element assembly (45) comprise at least one support surface arrangement (57) for the support of the first component (91) and the second component (92) directly at one of the predetermined fracture zones of the bearing opening (89) and at least one pressurisation surface (52, 54) for pressurising the bearing opening (89) for separating the first component (91) from the second component (92) of the workpiece (80), and wherein the at least one pressurisation surface (52, 54) and the at least one support surface arrangement (57) project in front of a reception zone (56) of the spreading element assembly (45), into which reception zone (56) a section of the bearing opening (89) can be deformed when separating the first component (91) from the second component (92), **characterised in that** at least one support surface of the support surface arrangement (57) has a strip-shaped form for supporting the predetermined fracture zone along a longitudinal axis of the bearing opening (89), and **in that** the at least one pressurisation surface (52, 54) extends in front of the reception zone (56) with respect to an advance direction of the actuating body (43).

2. Fracture separation device according to claim 1, **characterised in that** the at least one support surface arrangement (57) comprises a first support surface (53) and a second support surface (55) for the location of the first component (91) and the second component (92) on both sides of the fracture separation surface (90).

3. Fracture separation device according to claim 1 or 2, **characterised in that** each of the location surfaces for at least two or for each of the predetermined fracture zones (95) between the first component (91) and the second component (92) has a support surface arrangement (57).

4. Fracture separation device according to any of the preceding claims, **characterised in that** the at least one support surface arrangement (57) is designed for the substantially complete - in particular complete with respect to a longitudinal axis (35) of the bearing opening (89) - support of the bearing opening (89) in an exit region of the fraction separation surface or along an exit line of the fraction separation surface.

5. Fracture separation device according to any of the preceding claims, **characterised in that** the at least one support surface arrangement (57) has at least one support surface extending substantially along a complete length of the bearing opening (89) with respect to its longitudinal axis (35) from a first longitudinal end of the bearing opening (89) to a second longitudinal and of the bearing opening (89).

6. Fracture separation device according to any of the preceding claims, **characterised in that** the at least one spreading element is designed for the substantially all-over support of the bearing opening (89) and/or has a location surface supporting the bearing opening (89) along its entire length or the entire length of the spreading element in the region of the bearing opening (89) and/or its entire inner circumference between the predetermined fracture zones and/or does not have a reception zone (56), into which the bearing opening (89) can deform in the fracture separation process.

7. Fracture separation device according to any of the preceding claims, **characterised in that** the at least one pressurisation surface (52, 54) has a pressurisation surface (52, 54) or pressurisation zone in a maximum clearance between the predetermined fracture zones or in a vertex region of the spreading element between the predetermined fracture zones or between two support surface arrangements (57) assigned to a predetermined fracture zone each.

8. Fracture separation device according to any of the preceding claims, **characterised in that** the at least one pressurisation surface (52, 54) extends in an arcuate or annular fashion between the predetermined fracture zones.

9. Fracture separation device according to any of the preceding claims, **characterised in that** the at least one pressurisation surface (52, 54) has sections that are spaced from one another.

10. Fracture separation device according to any of the preceding claims, **characterised in that** the at least one pressurisation surface (52, 54) is connected to a support surface of the support surface arrangement (57), and/or **in that** a location surface has a section forming the pressurisation surface (52, 54) and a section forming the support surface of the support surface arrangement (57).

11. Fracture separation device according to any of the preceding claims, **characterised in that** an outer radius of one or all of the location surfaces corresponds precisely or substantially to an inner radius at a respective section of the inner circumference (94) of the bearing opening (89), and/or **in that** the one or all of the location surfaces is/are cylindrical and/or has/have an outer circumferential contour suitable for planar contact with an inner circumferential contour of the bearing opening (89), and/or **in that** one or all of the location surfaces does/do not have any curvature with respect to the longitudinal axis (35) of the bearing opening (89) or has/have a curvature corresponding to the curvature of the inner circumference (94) of the bearing opening (89), so that the respective location surface is in planar contact with the respective inner circumference.

12. Fracture separation device according to any of the preceding claims, **characterised in that** the first spreading element (41) and/or the at least one second spreading element (42) have/has a semicircular outer circumference, wherein the support surface arrangements (57) or a support surface of at least one support surface arrangement (57) of said spreading element (41, 42) are/is provided in the region of the semicircle and/or the at least one pressurisation surface (52, 54) is provided in the region of the vertex of the outer circumference (46) of the respective spreading element (41, 42).

13. Fracture separation device according to any of the preceding claims, **characterised in that** the at least one pressurisation surface (52, 54) has during the fracture separation process with respect to the longitudinal axis (35) a longitudinal distance (58) from at least one longitudinal end of the bearing opening (89) at an end face (101) of the workpiece (80), and/or **in that** the at least one pressurisation surface (52, 54) is assigned to a longitudinal end of the bearing opening (89) and the reception zone (56) extends from the pressurisation surface (52, 54) to the other longitudinal end of the bearing opening (89), and/or **in that** the spreading elements (41, 42) are designed to act on the bearing opening (89) in the manner of a wedge, by providing that the at least one pressurisation surface (52, 54) and the reception zone (56) are arranged behind each other with respect to the longitudinal axis (35) of the bearing opening (89).

14. Fracture separation device according to any of the preceding claims, **characterised in that** the at least one location surface or all location surfaces is/are strip-shaped or annular, and/or **in that** the at least one pressurisation surface (52, 54) forms a base leg extending transversely between support surface of the support surface arrangement (57), and/or **in that** it is provided for machining workpieces provided with a notch in the region of the fracture separation surface (90), in particular exclusively at an end face.

## Revendications

1. Dispositif de séparation par rupture pour séparer par rupture une pièce (80), en particulier une bielle (81), avec un ensemble d'éléments d'écartement (45) avec un premier élément d'écartement (41) et au moins un deuxième élément d'écartement (42), ainsi qu'un corps d'actionnement (43) pour actionner l'ensemble d'éléments d'écartement (45) depuis une position de positionnement dans une position d'écartement pour isoler un premier composant (91) de la pièce (80), en particulier un couvercle de bielle (86), d'un deuxième composant (92) de la pièce (80), en particulier d'un pied de bielle (85), dans lequel les éléments d'écartement (41, 42) peuvent être introduits dans la position de positionnement le long d'un axe longitudinal (35) dans une ouverture de palier (86) de la pièce (80) et exercent une pression, dans la position d'écartement, par des surfaces d'appui sur leur périphérie extérieure contre une périphérie intérieure (94) de l'ouverture de palier (89) de sorte que le premier composant (91) s'éloigne par rupture du deuxième composant (92) de la pièce (80) en formant des surfaces de séparation par rupture (90), dans lequel les surfaces de séparation par rupture (90) s'étendent en partant de zones de rupture théorique (95) de manière à s'éloigner radialement de l'ouverture de palier (89), dans lequel les surfaces d'appui de l'ensemble d'éléments d'écartement (45) comprennent au moins un ensemble de surfaces d'appui (57) pour soutenir le premier composant (91) et le deuxième composant (92) directement sur une des zones de rupture théorique de l'ouverture de palier (89) et au moins une surface d"exposition à une pression (52, 54) pour soumettre l'ouverture de palier (89) à l'action d'une pression en vue d'isoler le premier composant (91) du deuxième composant (92) de la pièce (80), et dans lequel l'au moins une surface d'exposition à une pression (52, 54) et l'au moins un ensemble de surfaces d'appui (57) font saillie devant une zone de logement (56) de l'ensemble d'éléments d'écartement (45), à l'intérieur de laquelle une section de l'ouverture de palier (89) peut se déformer lors de l'isolement du premier composant (91) du deuxième composant (92), **caractérisé en ce qu'**au moins une surface d'appui de l'au moins un ensemble de surfaces d'appui (57) présente une configuration en forme de bande pour soutenir la zone de rupture théorique le long d'un axe longitudinal de l'ouverture de palier (89), et que l'au moins une surface d'exposition à une pression (52, 54) s'étend devant la zone de logement (56) par rapport à une direction d'avancement du corps d'actionnement (43).

2. Dispositif de séparation par rupture selon la revendication 1, **caractérisé en ce que** l'au moins un ensemble de surfaces d'appui (57) comprend une première surface d'appui (53) et une deuxième surface d'appui (55) pour l'appui du premier composant (91) et du deuxième composant (92) de part et d'autre de la surface de séparation par rupture (90).

3. Dispositif de séparation par rupture selon la revendication 1 ou 2, **caractérisé en ce que** les surfaces d'appui présentent pour au moins deux ou chaque zone de rupture théorique (95) entre le premier composant (91) et le deuxième composant (92) respectivement un ensemble de surfaces d'appui (57).

4. Dispositif de séparation par rupture selon l'une quelconque des revendications précédentes, **caractérisé en ce que** l'au moins un ensemble de surfaces d'appui (57) est configuré pour soutenir sensiblement totalement, en particulier par rapport à un axe longitudinal (35) de l'ouverture de palier (89), ou totalement l'ouverture de palier (89) dans une zone de départ de la surface de séparation par rupture ou le long d'une ligne de départ de la surface de séparation par rupture.

5. Dispositif de séparation par rupture selon l'une quelconque des revendications précédentes, **caractérisé en ce que** l'au moins un ensemble de surfaces d'appui (57) présente au moins une surface d'appui, qui s'étend sensiblement sur une longueur totale de l'ouverture de palier (89) par rapport à son axe longitudinal (35) depuis une première extrémité longitudinale de l'ouverture de palier (89) vers une deuxième extrémité longitudinale de l'ouverture de palier (89).

6. Dispositif de séparation par rupture selon l'une quelconque des revendications précédentes, **caractérisé en ce qu'**au moins un élément d'écartement est configuré pour soutenir sensiblement sur toute la surface l'ouverture de palier (89) et/ou présente une surface d'appui soutenant l'ouverture de palier (89) sur la totalité de sa longueur ou la totalité de la longueur de l'élément d'écartement dans la zone de l'ouverture de palier (89) et/ou la totalité de sa périphérie intérieure entre les zones de rupture théorique et/ou ne présente aucune zone de logement (56), à l'intérieur de laquelle l'ouverture de palier (89) peut se déformer lors de la séparation par rupture.

7. Dispositif de séparation par rupture selon l'une quelconque des revendications précédentes, **caractérisé en ce que** l'au moins une surface d'exposition à une pression (52, 54) présente une surface d'exposition à une pression (52, 54) ou une zone d'exposition à une pression à une distance maximale entre les zones de rupture théorique ou dans une zone de sommet de l'élément d'écartement entre les zones de rupture théorique ou entre deux ensembles de surfaces d'appui (57) associés respectivement à une zone de rupture théorique.

8. Dispositif de séparation par rupture selon l'une quelconque des revendications précédentes, **caractérisé en ce que** l'au moins une surface d'exposition à une pression (52, 54) s'étend en forme d'arc ou d'anneau entre les zones de rupture théorique.

9. Dispositif de séparation par rupture selon l'une quelconque des revendications précédentes, **caractérisé en ce que** l'au moins une surface d'exposition à une pression (52, 54) présente des sections tenues à distance les unes par rapport aux autres.

10. Dispositif de séparation par rupture selon l'une quelconque des revendications précédentes, **caractérisé en ce que** l'au moins une surface d'exposition à une pression (52, 54) est reliée à une surface d'appui de l'ensemble de surfaces d'appui (57) et/ou une surface d'appui présente une section formant la surface d'exposition à une pression (52, 54) et une section formant une surface d'appui de l'ensemble de surfaces d'appui (57).

11. Dispositif de séparation par rupture selon l'une quelconque des revendications précédentes, **caractérisé en ce qu'**un rayon extérieur d'une ou de toutes les surfaces d'appui correspond exactement ou sensiblement à un rayon intérieur sur une section respective de la périphérie intérieure (94) de l'ouverture de palier (89), et/ou qu'une ou toutes les surfaces d'appui sont cylindriques et/ou présentent sur un contour périphérique extérieur adapté pour venir en appui sur la surface sur un contour périphérique intérieur de l'ouverture de palier (89), et/ou qu'une ou toutes les surfaces d'appui ne présentent par rapport à l'axe longitudinal (35) de l'ouverture de palier (89) aucune incurvation ou une incurvation correspondant à l'incurvation de la périphérie intérieure (94) de l'ouverture de palier (89) de sorte que la surface d'appui respective repose à plat sur la section de périphérie intérieure respective.

12. Dispositif de séparation par rupture selon l'une quelconque des revendications précédentes, **caractérisé en ce que** le premier élément d'écartement (41) et/ou l'au moins un deuxième élément d'écartement (42) présentent une périphérie extérieure (46) en forme de demi-cercle, dans lequel les ensembles de surfaces d'appui (57) ou une surface d'appui d'au moins un ensemble de surfaces d'appui (57) dudit élément d'écartement (41, 42) sont prévus dans la zone des extrémités longitudinales respectives du demi-cercle et/ou l'au moins une surface d'exposition à une pression (52, 54) est prévue dans la zone du point de sommet de la périphérie extérieure (46) de l'élément d'écartement (41, 42) respectif.

13. Dispositif de séparation par rupture selon l'une quelconque des revendications précédentes, **caractérisé en ce qu'**au moins une surface d'exposition à une pression (52, 54) présente au cours de la séparation par rupture par rapport à l'axe longitudinal (35) une distance longitudinale (58) par rapport à au moins une extrémité longitudinale de l'ouverture de palier (89) sur un côté frontal (101) de la pièce (80) et/ou l'au moins une surface d'exposition à une pression (52, 54) est associée à une extrémité longitudinale de l'ouverture de palier (89) et la zone de logement (56) s'étend depuis la surface d'exposition à une pression (52, 54) jusqu'à l'autre extrémité longitudinale de l'ouverture de palier (89), et/ou que les éléments d'écartement (41, 42) sont configurés pour agir à la manière d'une cale sur l'ouverture de palier (89) **en ce que** l'au moins une surface d'exposition à une pression (52, 54) et la zone de logement (56) sont disposées les unes derrière les autres par rapport à l'axe longitudinal (35) de l'ouverture de palier (89).

14. Dispositif de séparation par rupture selon l'une quelconque des revendications précédentes, **caractérisé en ce qu'**au moins une surface d'appui ou toutes les surfaces d'appui sont en forme de bande ou en forme d'anneau circulaire, et/ou que l'au moins une surface d'exposition à une pression (52, 54) forme une branche de base s'étendant de manière transversale entre des surfaces d'appui des ensembles de surfaces d'appui (57) et/ou qu'elle est prévue pour usiner des pièces (80) pourvues en particulier exclusivement sur un côté frontal d'une encoche dans la zone de la surface de séparation par rupture (90).
